# EUROPÄISCHE PATENTSCHRIFT

(11) **EP 3 330 485 B1**
(45) Veröffentlichungstag und Bekanntmachung des Hinweises auf die Patenterteilung: **29.04.2020**
(21) Anmeldenummer: 17202370.7
(22) Anmeldetag: 17.11.2017
(51) Int. Cl.: F01D 5/16, F01D 5/26, F01D 25/06

(54) **TURBOMASCHINENSCHAUFELANORDNUNG**
TURBO MACHINE BLADE ASSEMBLY
SYSTÈME DE PALE DE TURBOMACHINE

(30) Priorität: 21.11.2016 DE 102016222869
(43) Veröffentlichungstag der Anmeldung: 06.06.2018
(73) Patentinhaber: MTU Aero Engines AG, 80995 München (DE)
(72) Erfinder: Scharl, Richard, 85757 Karlsfeld (DE)

(56) Entgegenhaltungen:
- EP-A1- 2 806 106
- EP-A1- 2 947 271
- EP-A1- 3 018 292
- EP-A2- 2 677 119

## Beschreibung

Die vorliegende Erfindung betrifft eine Turbomaschinenschaufelanordnung, eine Turbomaschine, insbesondere Gasturbine, mit der Turbomaschinenschaufelanordnung sowie ein Verfahren zum Herstellen der Turbomaschinenschaufelanordnung.

Aus der eigenen WO 2012/095067 A1 ist es bekannt, in einem Schaufelfuß oder - blatt einer Gasturbinenschaufel Stimm- bzw. Impulskörper anzuordnen, die zum Stoßkontakt mit der Schaufel vorgesehen sind. Hierdurch kann ein neuartiges Konzept der Anmelderin zur Reduzierung von unerwünschten Schwingungen realisiert werden, welches im Wesentlichen nicht auf Reibungsdissipation, sondern einer Verstimmung von Eigenformen und -frequenzen durch Stöße der Impulskörper basiert.

Die eigene DE 10 2009 010 185 A1 schlägt vor, in einer Kavität in einem Innen- oder Außenring eines Schaufelclusters mehrere Dämpfungskörper vorzusehen, die bei reibungsbehafteten Stößen untereinander und mit der Kavität Schwingungsenergie dissipieren.

Aus der eigenen US 9,371,733 B2 ist eine Turbomaschinenlaufschaufelanordnung mit einer Kavität bekannt, in der eine Stimmmasse beweglich angeordnet ist.

Die EP 2 806 106 A1 betrifft eine Schaufel für eine Turbomaschine mit einem Schaufelblatt, das einen Kanal aufweist, wobei in dem Kanal eine Stoßkammer mit einem verengten Querschnitt zur Aufnahme eines einzigen Impulskörpers angeordnet ist.

Die EP 3 018 292 A1 betrifft eine Turbinenschaufel mit einer Aussparung in einer Oberfläche. In der Aussparung ist ein Dämpferfüllung angeordnet, die eine Kammer mit Dämpfungsmaterial aufweist und das aerodynamische Profil der Schaufel im Wesentlichen beibehalten soll.

Eine Aufgabe einer Ausführung der vorliegenden Erfindung ist es, eine verbesserte Turbomaschinenschaufelanordnung zur Verfügung zu stellen.

Diese Aufgabe wird insbesondere durch eine Turbomaschinenschaufelanordnung mit den Merkmalen des Anspruchs 1 gelöst. Ansprüche 8, 9 stellen eine Turbomaschine mit wenigstens einer hier beschriebenen Turbomaschinenschaufelanordnung bzw. ein Verfahren zum Herstellen einer hier beschriebenen Turbomaschinenschaufelanordnung unter Schutz. Vorteilhafte Ausführungsformen der Erfindung sind Gegenstand der Unteransprüche.

Zusätzlich oder alternativ weisen in einer Ausführung der bzw. ein oder mehrere der Körper (jeweils) eine, insbesondere minimale oder maximale, Außenabmessung auf, die wenigstens 1 mm und/oder höchstens 10 mm, insbesondere höchstens 5 mm beträgt, insbesondere bei 20°C.

Es hat sich überraschend herausgestellt, dass durch diese Parameter bzw. Grenzwerte jeweils bereits einzeln, insbesondere aber in Kombination, eine besonders vorteilhafte Reduzierung von Schaufelblattschwingungen bewirkt werden kann.

Nach einer Ausführung der vorliegenden Erfindung weist die Turbomaschinenschaufelanordnung eine ein- oder mehrteilige (elastische) Stützstruktur auf, die den bzw. die Körper federnd bzw. elastisch lagert bzw. abstützt, insbesondere fesselt bzw. anbindet, bzw. hierzu vorgesehen bzw. eingerichtet ist bzw. verwendet wird bzw. durch die der bzw. die Körper federnd bzw. elastisch gelagert bzw. abgestützt bzw. gefesselt bzw. angebunden ist/sind. In einer Weiterbildung beträgt eine minimale Wandstärke der elastischen Stützstruktur höchstens 50%, insbesondere höchstens 10%, und/oder wenigstens 1% einer maximalen Außenabmessung des Körpers.

Hierdurch kann in einer Ausführung die Wirkung, insbesondere Kinematik und/oder Dynamik, des bzw. der Körper verbessert werden, beispielsweise deren Bewegungs-, insbesondere Stoßenergiespeicherung und dergleichen.

Zusätzlich oder alternativ weist nach einer Ausführung der vorliegenden Erfindung die Turbomaschinenschaufelanordnung eine ein- oder mehrteilige Führung auf, die den bzw. die Körper führt, insbesondere derart, dass er in einem oder mehreren translatorischen und/oder einem oder mehreren rotatorischen Freiheitsgraden begrenztes Bewegungsspiel, insbesondere zu mehrfachen Stoßkontakten mit der Schaufel, aufweist, während seine restlichen Freiheitsgraden durch die Führung gesperrt sind, bzw. die hierzu vorgesehen bzw. eingerichtet ist bzw. verwendet wird bzw. durch die der bzw. die Körper (entsprechend) geführt ist/sind.

In einer Ausführung beträgt ein maximales translatorisches Bewegungsspiel des bzw. eines oder mehrerer der Körper(s jeweils) wenigstens 0,01 mm, insbesondere wenigstens 0,1 mm, und/oder wenigstens 1% einer minimalen Außenabmessung dieses Körpers und/oder höchstens 10 mm, insbesondere höchstens 1 mm, und/oder höchstens 100% einer maximalen Außenabmessung dieses Körpers, insbesondere bei 20°C.

Hierdurch kann in einer Ausführung die Wirkung, insbesondere Kinematik und/oder Dynamik, des bzw. der Körper (weiter) verbessert werden, beispielsweise Stoß(haupt)richtung(en), maximale (Bewegungs)Weglänge(n) und dergleichen.

In einer Weiterbildung ist/wird bzw. sind/werden der bzw. die Körper durch die Führung ungefesselt bzw. un- bzw. nicht angebunden geführt, insbesondere elastisch gelagert oder nicht elastisch gelagert.

Hierdurch kann in einer Ausführung die Wirkung, insbesondere Dynamik, des bzw. der Körper (weiter) verbessert werden, beispielsweise Stoßkontakte (stärker) variiert werden und dergleichen.

In einer Ausführung weist die Schaufel ein Schaufelblatt zur Strömungsumlenkung und/oder einen Schaufelfuß auf, über den die Schaufel in einer Weiterbildung zerstörungsfrei lösbar oder nicht zerstörungsfrei lösbar mit einem Gehäuse oder Rotor der Turbomaschine verbindbar bzw. verbunden ist bzw. wird. Gleichermaßen kann die Schaufel, insbesondere ihr Schaufelfuß, integral mit Gehäuse bzw. Rotor ausgebildet sein, insbesondere also als sogenannte "BLISK". In einer Ausführung ist an dem Schaufelblatt, insbesondere dessen schaufelfußzu- und/oder abgewandtem Ende bzw. - bezogen auf eine Haupt- bzw. Maschinen(dreh)achse der Turbomaschine - radial innen und/oder außen (jeweils), ein Deckband angeordnet, insbesondere integral mit dem Schaufelblatt ausgebildet oder, insbesondere nicht zerstörungsfrei lösbar, mit diesem verbunden.

Nach einer Ausführung der vorliegenden Erfindung ist bzw. wird die komplette Führung zum Führen des Körpers bzw. der Körper oder ein Teil der Führung zusammen bzw. gemeinsam, insbesondere integral, mit der kompletten Schaufel, insbesondere ihrem Schaufelblatt und/oder -fuß und/oder Deckband, oder einem Teil hiervon generativ hergestellt.

Zusätzlich oder alternativ ist bzw. wird nach einer Ausführung der vorliegenden Erfindung die komplette Stützstruktur zum federnden Lagern des Körpers bzw. der Körper oder ein Teil der Stützstruktur zusammen bzw. gemeinsam, insbesondere integral, mit der kompletten Schaufel, insbesondere ihrem Schaufelblatt und/oder -fuß und/oder Deckband, oder einem Teil hiervon und in einer Weiterbildung integral mit dem bzw. den kompletten Körper(n) oder (einem) Teil(en) hiervon generativ hergestellt.

Zusätzlich oder alternativ ist/sind bzw. wird/werden nach einer Ausführung der vorliegenden Erfindung der bzw. einer oder mehrere der Körper, insbesondere Impulskörper, (jeweils) teilweise oder komplett zusammen bzw. gemeinsam, insbesondere integral, mit der kompletten Schaufel, insbesondere ihrem Schaufelblatt und/oder - fuß und/oder Deckband, oder einem Teil hiervon generativ hergestellt.

Ein gemeinsam generativ hergestellter Bereich des Schaufel, Führung, Stützstruktur bzw. des bzw. der Körper(s) kann somit in einer Ausführung ein (echter) Teil(bereich) oder in einer anderen Ausführung auch die komplette Schaufel, Führung, Stütz struktur bzw. den bzw. die kompletten Körper sein bzw. bezeichnen. Daher wird zur kompakteren Darstellung vorliegend insbesondere auch von "wenigstens einem Bereich" gesprochen.

Durch die gemeinsame generative Herstellung von Schaufel(bereich) und Führung(sbereich), Stützstruktur(bereich) bzw. Körper(bereich(en)) können in einer Ausführung der bzw. die Körper vorteilhaft verliergesichert werden. Zusätzlich oder alternativ können hierdurch vorteilhafte, insbesondere komplexe Schaufeln, Führungen, Stützstrukturen bzw. Körper hergestellt und so insbesondere die Wirkung, insbesondere Kinematik und/oder Dynamik, des bzw. der Körper (weiter) verbessert werden, beispielsweise Kraftübertragungen, Bewegungsspiele und dergleichen.

Das generative bzw. additive Herstellen umfasst in einer Ausführung in an sich bekannter Weise das schichtweise Herstellen mittels wiederholtem Anordnen von, insbesondere flüssigem und/oder losem, insbesondere körnigen oder pulverförmigen, Ausgangsmaterial auf einer vorhergehend(verfestigt)en Schicht und lokalem Verfestigen und/oder wenigstens teilweisen Verbinden mit dieser, insbesondere chemisch und/oder physikalisch, insbesondere durch Energieeintrag, insbesondere thermisch und/oder elektromagnetisch, insbesondere optisch, insbesondere durch Belichtung, insbesondere mittels Laser(licht).

In einer Ausführung weist der gemeinsam mit Führung(sbereich), Stützstruktur(bereich) bzw. Körper(bereich(en)) generativ hergestellte Bereich der Schaufel eine Kontaktfläche auf, die der bzw. die Körper im Betrieb der Schaufel zur Reduzierung von Schwingungen der Schaufel, insbesondere temporär, insbesondere mehrfach und/oder stoßartig, kontaktieren, bzw. die hierzu vorgesehen bzw. eingerichtet ist bzw. verwendet wird.

Hierdurch kann in einer Ausführung eine vorteilhafte Kontaktkinematik und/oder -dynamik, insbesondere enge Bewegungsspiele und/oder materialeinheitliche Kontaktflächen, zur Verfügung gestellt und so die Schwingungsreduzierung (weiter) verbessert werden.

In einer Ausführung weisen der Bereich der Schaufel und der damit gemeinsam generativ hergestellte Bereich der Führung, der Stützstruktur und/oder des bzw. eines oder mehrerer der Körper(s) Metall auf, in einer Weiterbildung sind sie generativ aus Metallpulver als Ausgangsmaterial hergestellt.

Hierdurch kann in einer Ausführung eine vorteilhafte Dynamik zur Verfügung gestellt und so die Schwingungsreduzierung (weiter) verbessert werden.

In einer Ausführung weist die Führung einen oder mehrere offenen Hohlräume und/oder einen oder mehrere geschlossene Hohlräume auf, in dem der bzw. in denen jeweils einer oder mehrere der Körper mit Bewegungsspiel in einem oder mehreren Freiheitsgraden angeordnet bzw. aufgenommen ist bzw. sind.

Durch Hohlräume kann eine vorteilhafte Führung zur Verfügung gestellt werden.

Durch offene Hohlräume kann in einer Ausführung insbesondere bei der generativen Herstellung nicht verfestigtes Ausgangsmaterial vorteilhaft abgeführt werden.

Durch geschlossene Hohlräume können in einer Ausführung der bzw. die aufgenomme(n) Körper gegen Arbeitsfluid der Turbomaschine geschützt und/oder deren Dynamik, insbesondere Aerodynamik verbessert werden.

In einer Weiterbildung ist eine maximale Außenabmessung des Körpers bzw. eines oder mehrerer der Körper, beispielsweise ein Außendurchmesser eines kugelförmigen Körpers, (jeweils) größer als eine maximale Innenabmessung bzw. lichte Weite einer Durchgangsöffnung einer Wandung des offenen Hohlraums, beispielsweise größer als ein Innendurchmesser einer kreisförmigen Durchgangsöffnung.

Hierdurch können in einer Ausführung der bzw. die Körper verliergesichert und trotzdem bei der generativen Herstellung nicht verfestigtes Ausgangsmaterial vorteilhaft abgeführt werden.

Zusätzlich oder alternativ ist in einer Weiterbildung eine bzw. die maximale Außenabmessung des Körpers bzw. eines oder mehrerer der Körper (jeweils) größer als ein maximales Bewegungsspiel dieses Körpers in der Führung, insbesondere in einem oder mehreren translatorischen Freiheitsgrad(en), insbesondere wenigstens doppelt so groß wie das maximale (translatorische) Bewegungsspiel.

Durch solche im Verhältnis zu ihrem maximalen Bewegungsspiel große Körper können bestimmte Schwingungen, insbesondere Schwingungsmoden, besonders vorteilhaft reduziert werden.

In einer Weiterbildung ist eine bzw. die maximale Außenabmessung des Körpers bzw. eines oder mehrerer der Körper (jeweils) kleiner als ein maximales Bewegungsspiel dieses Körpers in der Führung, insbesondere in einem oder mehreren translatorischen Freiheitsgrad(en), insbesondere höchstens halb so groß wie das maximale (translatorische) Bewegungsspiel.

Durch solche im Verhältnis zu ihrem maximalen Bewegungsspiel kleine Körper können andere Schwingungen, insbesondere Schwingungsmoden, besonders vorteilhaft reduziert werden.

In einer Ausführung ist/wird bzw. sind/werden der bzw. die Körper, die Führung und/oder die Stützstruktur in einer, insbesondere geschlossenen, Kavität angeordnet, die ihrerseits ganz oder teilweise durch die Schaufel, insbesondere den generativ hergestellten Bereich der Schaufel, definiert bzw. begrenzt ist.

Hierdurch können in einer Ausführung, insbesondere auch bei offenen Hohlräumen, Führung, Stützstruktur und/oder Körper gegen Arbeitsfluid der Turbomaschine geschützt werden. In einer Weiterbildung ist bzw. wird die Kavität durch ein weiteres Bauteil, insbesondere ein Gehäuse oder einen Rotor, der Turbomaschine, geschlossen, insbesondere, indem die Schaufel, insbesondere zerstörungsfrei lösbar oder nicht zerstörungsfrei lösbar, hieran befestigt ist bzw. wird.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: einen Abschnitt einer Turbomaschinenschaufelanordnung einer Gas-turbine nach einer Ausführung der vorliegenden Erfindung; und
- Fig. 2: einen Abschnitt einer Turbomaschinenschaufelanordnung einer Gas-turbine nach einer weiteren Ausführung der vorliegenden Erfindung.

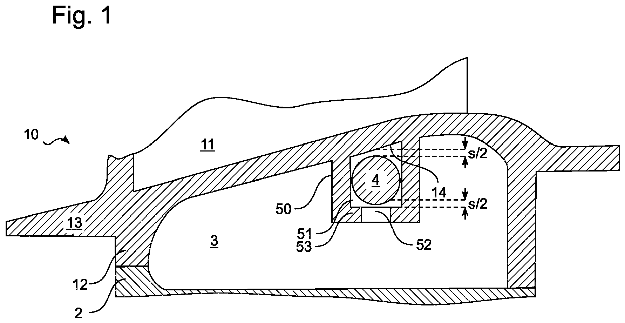

Fig. 1 zeigt einen Abschnitt einer Turbomaschinenschaufelanordnung einer Gasturbine nach einer Ausführung der vorliegenden Erfindung mit einer Lauf- oder Leitschaufel 10, von der in Fig. 1 ein Abschnitt eines Schaufelblattes 11, ein Schaufelfuß 12 und ein daran angeordneten Deckband 13 dargestellt ist.

Der Schaufelfuß 12 ist an einem Gehäuse oder Rotor 2 angeordnet und definiert mit diesem eine geschlossene Kavität 3.

In der Kavität 3 ist eine Führung 50 zum beweglichen Führen eines Körpers 4 zur Schwingungsreduzierung der Schaufel 10 durch mehrfache Stoßkontakte mit dieser angeordnet, die einen offenen Hohlraum 51 aufweist, in dem der kugelförmige Körper 4 mit Bewegungsspiel in einem translatorischen (vertikal in Fig. 1) und drei rotatorischen Freiheitsgraden angeordnet ist, wobei ein Teil des Schaufelfußes 12 bzw. Deckbands 13 eine Kontaktfläche 14 zum Kontaktieren des Körpers 4 aufweist bzw. bildet.

Wie in der teilweise schematisierten Darstellung der Fig. 1 angedeutet, ist der Außendurchmesser des kugelförmigen Körpers 4 größer als eine maximale Innenabmessung bzw. lichte Weite einer Durchgangsöffnung 52 einer Wandung 53 der Führung bzw. des offenen Hohlraum und außerdem größer als ein maximales Bewegungsspiel s des Körpers 4 in Führung 50 bzw. Hohlraum 51.

Schaufelblatt 11, Schaufelfuß 12, Deckband 13, die (Wandung 52 von) Führung 50 bzw. Hohlraum 51 sowie der (Impuls)Körper 4 werden bzw. sind zusammen generativ aus Metallpulver hergestellt. Hierdurch kann insbesondere der Körper 4 in einem Arbeitsschritt verliergesichert in dem Hohlraum 51 hergestellt bzw. angeordnet werden. Durch das anschließende Verbinden des Schaufelfußes 12 mit Gehäuse bzw. Rotor 2 bzw. die hierdurch definierte Kavität 3 ist der Körper 4 in dem offenen Hohlraum 51 gegen Arbeitsfluid der Gasturbine vorteilhaft geschützt.

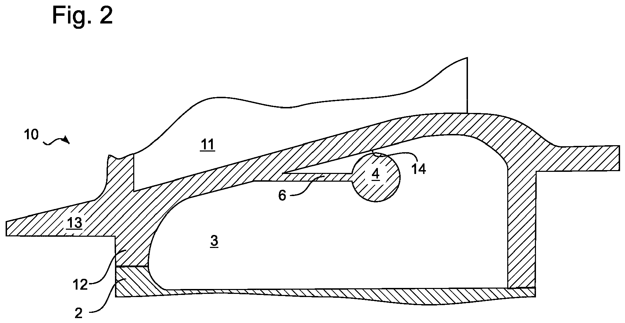

Fig. 2 zeigt in Fig. 1 entsprechender Weise einen Abschnitt einer Turbomaschinenschaufelanordnung einer Gasturbine nach einer weiteren Ausführung der vorliegenden Erfindung. Einander entsprechende Merkmale sind durch identische Bezugszeichen identifiziert, so dass auf die vorstehende Beschreibung Bezug genommen und nachfolgend nur auf Unterschiede eingegangen wird.

In der Ausführung der Fig. 2 ist der kugelförmige Körper 4 nicht in einer Führung gelagert, sondern in der Kavität 3 durch eine dünnwandige Stützstruktur 6 am Schaufelfuß 12 elastisch abgestützt bzw. angebunden, die zusammen mit Schaufelblatt 11, Schaufelfuß 12, Deckband 13, und (Impuls)Körper 4 generativ aus Metallpulver hergestellt wird bzw. ist.

Hierdurch kann insbesondere der Körper 4 wiederum in einem Arbeitsschritt verliergesichert in der Kavität 3 hergestellt bzw. angeordnet werden. Durch das anschließende Verbinden des Schaufelfußes 12 mit Gehäuse bzw. Rotor 2 sind der Körper 4 und Stützstruktur 6 wiederum gegen Arbeitsfluid der Gasturbine vorteilhaft geschützt.

Obwohl in der vorhergehenden Beschreibung exemplarische Ausführungen erläutert wurden, sei darauf hingewiesen, dass eine Vielzahl von Abwandlungen möglich ist.

So kann beispielsweise der Körper 4 der Ausführungen der Fig. 1, 2 statt auf einer schaufelblattabgewandten Seite des Schaufelfußes 12 auch im Schaufelblatt 11 oder einem gegenüberliegenden (weiteren) Deckband (nicht dargestellt) angeordnet und dieses hierzu wenigstens teilweise zusammen mit der Führung bzw. Stützstruktur generativ hergestellt sein bzw. werden.

Zusätzlich oder alternativ kann insbesondere in der Ausführung der Fig. 1 die Führung 50 bzw. in der Ausführung der Fig. 2 die Stützstruktur 6, die jeweils eine (Stoß)Kinematik vorgeben, entfallen und der in der Kavität 3 aufgenommene (Impuls)Körper 4 zusammen mit (wenigstens) einem Bereich der Schaufel 10, beispielsweise Schaufelfuß 12, Deckband 13 und/oder Schaufelblatt 11 oder einem Teil hiervon, generativ hergestellt werden bzw. sein.

Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 10: Schaufel
- 11: Schaufelblatt
- 12: Schaufelfuß
- 13: Deckband
- 14: Kontaktfläche
- 2: Gehäuse/Rotor
- 3: Kavität
- 4: (Impuls)Körper
- 50: Führung
- 51: Hohlraum
- 52: Öffnung
- 53: Wandung
- 6: Stützstruktur
- s: (maximales) Bewegungsspiel

## Patentansprüche

1. Turbomaschinenschaufelanordnung, insbesondere für eine Verdichter- oder Turbinenstufe einer Gasturbine, die wenigstens eine Schaufel (10), insbesondere Lauf- oder Leitschaufel, und wenigstens einen beweglichen Körper (4) zur Schwingungsreduzierung dieser Schaufel aufweist, **dadurch gekennzeichnet, dass** wenigstens ein Bereich einer Führung (50) zum Führen des Körpers und/oder wenigstens ein Bereich einer Stützstruktur (6) zum federnden Lagern des Körpers und/oder wenigstens ein Bereich des Körpers (4) gemeinsam mit wenigstens einem Bereich der Schaufel (10), insbesondere eines Schaufelblattes (11) und/oder -fußes (12) und/oder eines daran angeordneten Deckbandes (13), generativ hergestellt ist.

2. Turbomaschinenschaufelanordnung nach dem vorhergehenden Anspruch, **dadurch gekennzeichnet, dass** der Körper ein Impulskörper (4) zur Schwingungsreduzierung der Schaufel durch mehrfache Stoßkontakte mit dieser ist.

3. Turbomaschinenschaufelanordnung nach einem der vorhergehenden Ansprüche, **dadurch gekennzeichnet, dass** der generativ hergestellte Bereich der Schaufel eine Kontaktfläche (14) zum Kontaktieren des Körpers (4) aufweist.

4. Turbomaschinenschaufelanordnung nach einem der vorhergehenden Ansprüche, **dadurch gekennzeichnet, dass** der generativ hergestellte Bereich der Schaufel (10), der generativ hergestellte Bereich der Führung (50-52), der generativ hergestellte Bereich der Stützstruktur (6) und/oder der generativ hergestellte Bereich des Körpers (4) Metall aufweist, insbesondere aus Metallpulver hergestellt ist.

5. Turbomaschinenschaufelanordnung nach einem der vorhergehenden Ansprüche, **dadurch gekennzeichnet, dass** die Führung einen offenen oder geschlossenen Hohlraum (51) aufweist, in dem der Körper (4) mit Bewegungsspiel angeordnet ist.

6. Turbomaschinenschaufelanordnung nach dem vorhergehenden Anspruch, **dadurch gekennzeichnet, dass** eine maximale Außenabmessung des Körpers (4) größer als eine maximale Innenabmessung einer Durchgangsöffnung (52) einer Wandung (53) des offenen Hohlraum (51) und/oder größer oder kleiner als ein maximales Bewegungsspiel ist.

7. Turbomaschinenschaufelanordnung nach einem der vorhergehenden Ansprüche, **dadurch gekennzeichnet, dass** der Körper (4), die Führung (50) und/oder die Stützstruktur (6) in einer, insbesondere geschlossenen, Kavität (3) angeordnet ist, die wenigstens teilweise durch die Schaufel (10), insbesondere den generativ hergestellten Bereich der Schaufel, definiert ist.

8. Turbomaschine, insbesondere Gasturbine, die wenigstens eine Turbomaschinenschaufelanordnung nach einem der vorhergehenden Ansprüche aufweist.

9. Verfahren zum Herstellen einer Turbomaschinenschaufelanordnung nach einem der vorhergehenden Ansprüche, **dadurch gekennzeichnet, dass** der Bereich der Führung (50), Stützstruktur (6) und/ des Körpers (4) zusammen mit dem Bereich der Schaufel (10) generativ hergestellt wird.

## Claims

1. Turbomachine blade arrangement, in particular for a compressor or turbine stage of a gas turbine, which arrangement has at least one blade (10), in particular a rotor blade or guide blade, and at least one movable body (4) for reducing the vibration of said blade, **characterized in that** at least one region of a guide (50) for guiding the body and/or at least one region of a support structure (6) for resiliently mounting the body and/or at least one region of the body (4) together with at least one region of the blade (10), in particular of an airfoil (11) and/or blade root (12) and/or of a shroud (13) arranged thereon, is additively manufactured.

2. Turbomachine blade arrangement according to the preceding claim, **characterized in that** the body is an impulse body (4) for reducing the vibration of the blade by means of repeated impact contact therewith.

3. Turbomachine blade arrangement according to either of the preceding claims, **characterized in that** the additively manufactured region of the blade has a contact surface (14) for contacting the body (4).

4. Turbomachine blade arrangement according to any of the preceding claims, **characterized in that** the additively manufactured region of the blade (10), the additively manufactured region of the guide (50-52), the additively manufactured region of the support structure (6) and/or the additively manufactured region of the body (4) comprises metal, in particular is manufactured from metal powder.

5. Turbomachine blade arrangement according to any of the preceding claims, **characterized in that** the guide has an open or closed cavity (51) in which the body (4) is arranged with play of movement.

6. Turbomachine blade arrangement according to the preceding claim, **characterized in that** a maximum outer dimension of the body (4) is larger than a maximum inner dimension of a through-opening (52) in a wall (53) of the open cavity (51) and/or larger or smaller than a maximum play of movement.

7. Turbomachine blade arrangement according to any of the preceding claims, **characterized in that** the body (4), the guide (50) and/or the support structure (6) is arranged in a cavity (3) which is in particular closed and which is at least partially defined by the blade (10), in particular the additively manufactured region of the blade.

8. Turbomachine, in particular a gas turbine, which has at least one turbomachine blade arrangement according to any of the preceding claims.

9. Method for producing a turbomachine blade arrangement according to any of the preceding claims, **characterized in that** the region of the guide (50), support structure (6) and/or body (4) is additively manufactured together with the region of the blade (10).

## Revendications

1. Système de pale de turbomachine, en particulier pour un étage de compresseur ou de turbine d'une turbine à gaz, lequel système comporte au moins une pale (10), en particulier une pale mobile ou directrice, et au moins un corps mobile (4) permettant de réduire les vibrations de ladite pale, **caractérisé en ce qu'**au moins une zone d'un guide (50) pour le guidage du corps et/ou au moins une zone d'une structure de support (6) pour le montage élastique du corps et/ou au moins une zone du corps (4) conjointement avec au moins une zone de la pale (10), en particulier d'une lame (11) et/ou d'un pied (12) de pale et/ou d'une bande de recouvrement (13) disposée dessus, est produite de manière générative.

2. Système de pale de turbomachine selon la revendication précédente, **caractérisé en ce que** le corps est un corps d'impulsion (4) permettant de réduire les vibrations de la pale par de multiples contacts d'impact avec celle-ci.

3. Système de pale de turbomachine selon l'une des revendications précédentes, **caractérisé en ce que** la zone de la pale produite de manière générative comporte une surface de contact (14) pour la mise en contact avec le corps (4).

4. Système de pale de turbomachine selon l'une des revendications précédentes, **caractérisé en ce que** la zone de la pale (10) produite de manière générative, la zone du guide (50-52) produite de manière générative, la zone de la structure de support (6) produite de manière générative et/ou la zone du corps (4) produite de manière générative comporte du métal, est constituée en particulier de poudre métallique.

5. Système de pale de turbomachine selon l'une des revendications précédentes, **caractérisé en ce que** le guide présente une cavité (51) ouverte ou fermée dans laquelle le corps (4) est disposé conjointement avec un jeu de mouvement.

6. Système de pale de turbomachine selon la revendication précédente, **caractérisé en ce qu'**une dimension extérieure maximale du corps (4) est supérieure à une dimension intérieure maximale d'une ouverture de passage (52) d'une paroi (53) de la cavité ouverte (51) et/ou supérieure ou inférieure à un jeu de mouvement maximal.

7. Système de pale de turbomachine selon l'une des revendications précédentes, **caractérisé en ce que** le corps (4), le guide (50) et/ou la structure de support (6) sont disposés dans une cavité (3), en particulier dans une cavité fermée, laquelle est définie au moins partiellement par la pale (10), en particulier par la zone de la pale produite de manière générative.

8. Turbomachine, en particulier turbine à gaz, qui comporte au moins un système de pale de turbomachine selon l'une des revendications précédentes.

9. Procédé de production d'un système de pale de turbomachine selon l'une des revendications précédentes, **caractérisé en ce que** la zone du guide (50), de la structure de support (6) et/ou du corps (4) conjointement avec la zone de la pale (10) est produite de manière générative.
